# EUROPÄISCHE PATENTSCHRIFT

(11) **EP 2 987 878 B1**
(45) Veröffentlichungstag und Bekanntmachung des Hinweises auf die Patenterteilung: **05.04.2017**
(21) Anmeldenummer: 15163136.3
(22) Anmeldetag: 10.04.2015
(51) Int. Cl.: C22F 1/05, C22F 1/053, C22F 1/00, C22C 21/02, C22C 21/08, C22C 21/10

(54) **VERFAHREN ZUR HERSTELLUNG EINES KRAFTFAHRZEUGBAUTEILS AUS EINER HÄRTBAREN ALUMINIUMLEGIERUNG**
METHOD FOR MANUFACTURING A MOTOR VEHICLE PART MADE FROM A HARDENABLE ALUMINIUM ALLOY
PROCÉDÉ DE FABRICATION D'UN ÉLÉMENT DE VÉHICULE AUTOMOBILE EN ALLIAGE D'ALUMINIUM DURCISSABLE

(30) Priorität: 20.08.2014 DE 102014111920
(43) Veröffentlichungstag der Anmeldung: 24.02.2016
(73) Patentinhaber: Benteler Automobiltechnik GmbH, 33102 Paderborn (DE)
(72) Erfinder: Bohner, Friedrich, Dr., 33813 Oerlinghausen (DE); Dörr, Jochen, Dr., 33104 Bad Driburg (DE); Grewe, Jochem, Dipl.-Ing., 33154 Salzkotten (DE); Hielscher, Christian, Dr., 33129 Delbrück (DE); Rauscher, Boris, Dr. Dipl.-Ing., 33100 Paderborn (DE); Tölle, Jörn, Dr., 33102 Paderborn (DE)
(74) Vertreter: Griepenstroh, Jörg

(56) Entgegenhaltungen:
- EP-A2- 1 530 651
- DE-A1-102012 010 471
- US-A1- 2005 189 044
- US-A1- 2008 283 163
- US-A1- 2011 111 081
- US-A1- 2011 297 278
- US-A1- 2012 186 706
- US-A1- 2013 216 790
- US-A1- 2014 069 557

## Beschreibung

Die vorliegende Erfindung betrifft ein Verfahren zur Herstellung eines Kraftfahrzeugbauteils aus einer ausscheidungshärtbaren Aluminiumlegierung gemäß den Merkmalen im Patentanspruch 1.

Aus dem Stand der Technik ist es bekannt, Fahrzeugbauteile sowie Kraftfahrzeugstrukturbauteile aus metallischen Werkstoffen herzustellen. Hierbei wird einer selbsttragenden Kraftfahrzeugkarosserie eine notwendige Steifigkeit für den regulären Fahrzeugbetrieb gegeben. In den letzten Jahren sind die Anforderungen an solche Kraftfahrzeugkarosserien jedoch stark gestiegen. Es stand nicht mehr nur die reine Formgebung im Vordergrund, sondern gleichzeitig auch die gezielte Einstellung von Eigenschaften im Falle eines Fahrzeugcrashes sowie der konsequenten Anforderung an den Leichtbau.

Hierzu ist es aus dem Stand der Technik bekannt, Stahlwerkstoffe einzusetzen, mit denen es möglich ist, Bauteile mit hochfesten oder gar höchstfesten Eigenschaften bereitzustellen. Diese hochfesten oder höchstfesten Eigenschaften werden gezielt partiell an den Bauteilen hergestellt.

Alternativ ist es bekannt, Kraftfahrzeugbauteile aus Aluminium herzustellen. Aluminium kommt hierbei als Leichtmetallbauteil zum Einsatz und ermöglicht durch sein geringes spezifisches Eigengewicht eine entsprechende Gewichtsersparnis. Die Herstellung des Aluminiumbauteils für Kraftfahrzeuge, ist beispielsweise aus der DE 10 2009 008 282 A1 oder der US 2011/011 1081 A1 bekannt.

Aufgabe der vorliegenden Erfindung ist es, ausgehend vom Stand der Technik ein Verfahren zur Herstellung eines Kraftfahrzeugbauteils aus einer Leichtmetalllegierung aufzuzeigen, mit dem es verfahrensökonomisch und kostengünstig möglich ist ein Kraftfahrzeugbauteil zu produzieren.

Die zuvor genannte Aufgabe wird erfindungsgemäß mit einem Herstellungsverfahren gemäß den Merkmalen im Patentanspruch 1 gelöst.

Vorteilhafte Ausführungsvarianten sind Gegenstand der abhängigen Patentansprüche.

Das erfindungsgemäße Verfahren zur Herstellung eines Kraftfahrzeugbauteils ist in Anspruch 1 definiert.

Mit dem erfindungsgemäßen Verfahren ist es möglich und insbesondere sehr zeiteffizient, besonders bevorzugt im Takt der Produktionslinie ein Aluminiumkraftfahrzeugbauteil mit partiell voneinander verschiedenen Festigkeitsbereichen herzustellen. Hierzu wird insbesondere die Platine aus einer 7000er Aluminiumlegierung mit bevorzugt dem Hauptlegierungsbestandteil Zink sowie einem hohen Magnesiumgehalt im Zustand T4, T6 oder aber T7 bereitgestellt. Die so bereitgestellte Platine aus einer Aluminiumlegierung wird sodann bei einer Temperatur zwischen 350°C und 500°C insbesondere zwischen 440°C und 480°C für einen Zeitraum von 2 bis 30 min., insbesondere 3 bis 20 min., ganz besonders bevorzugt von 5 bis 15 min. einer Glühbehandlung unterzogen. Hierbei erfolgt ein Energieeintrag aufgrund der zugeführten Wärme in das Kristallgitter des Werkstoffes. Es entsteht dabei ein Mischkristall, in dem Atome regellos Gitterplätze in einer Matrix einnehmen. Es handelt sich bei der Dehngrenze um die Dehngrenze RP 0,2. Alternativ kann eine Platine aus einer 6000er Aluminiumlegierung verwendet werden. Diese wird besonders bevorzugt bei einer Temperatur zwischen 490 C und 545°C bei einem Zeitraum von 2 bis 30 min., insbesondere 3 bis 20 min. und bevorzugt 5 bis 15 min. lösungsgeglüht.

Der jeweilige Zustand wird durch Abschrecken eingefroren, sodass die Atome zwangsgelöst in der Matrix verbleiben. Der Zustand wird auch als übersättigter Mischkristall bezeichnet, der einen thermodynamisch nicht stabilen Zustand aufweist. Erfindungsgemäß ist es jedoch möglich, dass die Platine nach dem Glühen, für einen Übergangszeitraum von bis zu 1 Tag, in diesem Zustand leicht umformbar ist mit insbesondere hohen Formgebungsfreiheitsgraden. Es folgt somit auf das Abschrecken ein Umformen. Es ist jedoch weiterhin erfindungsgemäß vorgesehen, dass das Abschrecken selbst auf partiell voneinander verschiedene Temperaturen erfolgt. Durch das Abschrecken auf unterschiedliche Temperaturen werden bereits Bereiche mit voneinander verschiedenen Zuständen der Mischkristalle sowie Korngrenzenbelegungen eingestellt, so dass beim anschließenden Auslagerungsprozess voneinander verschiedene Festigkeiten eingestellt werden.

Die Temperaturen nach dem partiell unterschiedlichen Abschrecken der ersten und zweiten Bereiche der Platine werden bevorzugt für einen Zeitraum von 0,05 bis 30 Minuten, insbesondere 0,1 bis 20 Minuten und bevorzugt 0,2 bis 15 Minuten gehalten.

Der Auslagerungsprozess findet erfindungsgemäß wiederum mit einem Warmauslagern durch Erwärmen der zu dem Kraftfahrzeugbauteil geformten Platine statt. Hierbei wird eine Dehngrenze in mindestens einem ersten Bereich nachfolgend auch Bereich erster Art genannt, kleiner 200 MPa und größer 120 MPa eingestellt und in weiteren Bereichen, nachfolgend auch zweite Bereiche oder Bereich zweiter Art genannt, kleiner gleich 550 MPa und größer 200 MPa eingestellt. Dabei liegt das Dehngrenzendelta zwischen den Bereichen bei größer 50 bevorzugt größer 100 MPa. Weiterhin bevorzugt wird in den Bereichen zweiter Art eine Dehngrenze zwischen 300 und 450 MPa und besonders bevorzugt eine Dehngrenze zwischen 350 und 450 MPa eingestellt.

Erfindungsgemäß ist es wiederum möglich, dass das Warmauslagern mehrerer Kraftfahrzeugbauteile in einem Ofen stattfindet, so dass alle Bauteile homogen auf eine Warmauslagerungstemperatur erwärmt werden. Weiterhin kann vorgesehen werden, dass das Warmauslagern in mehreren Stufen mit unterschiedlichen Temperatur-Zeitverläufen durchgeführt wird. Die voneinander verschiedenen Festigkeitsbereiche werden durch die unterschiedlichen Abschrecktemperaturen sowie unterschiedlichen Abkühlverläufe und die Haltezeit auf der jeweiligen Abschrecktemperatur der lösungsgeglühten Platine erreicht.

Im Rahmen der Erfindung ist es somit möglich auf einfache zeit- und kosteneffiziente Weise ein Kraftfahrzeugbauteil aus Aluminium mit voneinander verschiedenen Festigkeitsbereichen herzustellen. Das Kraftfahrzeugbauteil kann dabei insbesondere aus einer Platine mit gleicher Wandstärke ausgebildet werden. Im Rahmen der Erfindung ist es jedoch auch möglich, dass das Kraftfahrzeugbauteil aus einer Platine aus einem Aluminiumwerkstoff ausgebildet wird, wobei die Platine voneinander verschiedene Wandstärken aufweist. Die voneinander verschiedenen Wandstärken werden an der Platine durch walztechnische Bearbeitung oder thermisches Fügen von einzelnen Platinen mit unterschiedlichen Wandstärken hergestellt. Alle vorstehend und nachfolgend beschriebenen Prozessschritte sind bei Platinen mit homogener oder voneinander verschiedener Wandstärke durchführbar.

In bevorzugter Ausführungsvariante ist es weiterhin möglich, dass auf das erste Abschrecken auf eine Temperatur unter 250°C in Bereichen erster Art und eine Temperatur auf unter 150°C in Bereichen zweiter Art wenigstens eine zweite Abschreckstufe folgt, wobei in der zweiten oder einer weiteren Abschreckstufe dann insbesondere die gesamte Platine auf eine Temperatur unter 100°C und insbesondere auf Raumtemperatur zwischen 15 und 40°C abgeschreckt wird. Dies kann in der ersten Abschreckstufe insbesondere in einer Temperierstation durch eine lokal in der Temperatur geregelte Kontaktkühlung durchgeführt werden der dann bevorzugt eine vollständige Kontaktkühlung folgt. Es kann aber auch bereits ab der zweiten Abschreckstufe beispielsweise in einem Abschreckbecken durch vollständiges Eintauchen der Platine durchgeführt werden.

Im Anschluss an das Abschrecken mittels einstufigem oder aber mehrstufigem Abschreckverfahren wird dann das Umformen bei im Wesentlichen der Abschrecktemperatur durchgeführt oder aber das Umformen wird bei Raumtemperatur durchgeführt. Das Umformen bei Abschrecktemperatur kann somit in Bereichen erster Art bis ca. 250°C und in Bereichen zweiter Art bis ca. 150°C durchgeführt werden. In den Bereichen, in denen verzögert abgeschreckt wird, besteht ein höherer Ausscheidungsdruck, so dass es in der Folge bereits während des Abschreckens zu teilweise gröberer Ausscheidungsbildung kommt, welche bei der späteren Warmauslagerung zu niedrigeren Festigkeiten führen. In den Bereichen, in denen stärker abgeschreckt wird, mithin in den Bereichen zweiter Art entsteht ein Mischkristallgefüge welches sich weitestgehend in Lösung befindet und in Folge der Ausscheidungshärtung beim späteren Warmauslagern feine und weitestgehend homogen verteilte Ausscheidungen entstehen, wodurch entsprechend eine höhere Festigkeit eingestellt wird.

Im Falle des Umformens bei im Wesentlichen der Abschrecktemperatur weisen Bereiche erster Art und Bereiche zweiter Art voneinander verschiedene Temperaturen auf. Im Falle des Umformens bei Raumtemperatur ist diese entweder durch weitere Abschreckvorgänge herbeigeführt worden oder aber alternativ durch zunächst Lagerung der in der ersten Abschreckstufe partiell unterschiedlich abgeschreckten Platine. Die Lagerung sollte jedoch im Falle der 6000er Aluminiumlegierung einen Zeitraum von 72 Std. nicht übersteigen, und im Falle einer 7000er Aluminiumlegierung einen Zeitraum von 36 Stunden nicht übersteigen, da eine mit der Zeit fortgeschrittene Kaltauslagerung der Platine das Verformungsvermögen reduziert.

Erfindungsgemäß kann weiterhin vorgesehen werden, dass das Warmauslagern nach dem Umformen innerhalb von weniger als sieben Tagen, bevorzugt innerhalb von weniger als drei Tagen, begonnen wird. Damit wird erreicht, dass die nach dem Umformen unter Umgebungsbedingungen bei Raumtemperatur stattfindenden Kaltauslagerungsprozesse nicht die anschließende Einstellbarkeit der Festigkeitseigenschaften des Bauteils durch das Warmauslagern negativ beeinflussen.

Weiterhin besonders bevorzugt wird die Warmauslagerung mehrstufig durchgeführt, wobei in einer ersten Stufen für einen Zeitraum von 6 bis 24 Std. bei 80 bis 150°C, besonders bevorzugt 80-120°C, und in einer daran anschließenden zweiten Stufe für einen Zeitraum von 6 bis 24 Std. bei 100°C bis 200°C, besonders bevorzugt 100-150°C, warm ausgelagert wird. Die erste und/oder zweite Stufe kann auch noch in weitere Zwischenstufen unterteilt werden. Durch die erfindungsgemäße Wahl eines einstufigen oder mehrstufigen Warmauslagerungsprozesses sowie die Parameter Zeit und Temperatur ist es somit möglich, die gewünschten Festigkeitseigenschaften an der umgeformten Aluminiumplatine durch den Warmauslagerungsprozess gezielt lokal einzustellen, aufgrund der zuvor durchgeführten partiellen Abschreckung.

Alternativ ist es auch möglich, dass das an das Umformen anschließende Warmauslagern in einem Zeitraum von 5 bis 24 Std. bei einer Temperatur zwischen 100°C und 200°C, insbesondere 140°C bis 160°C durchzuführen. Alle durch Umformen der Platine hergestellten Kraftfahrzeugbauteile können somit in einem Ofen eingelagert werden.

Weiterhin besonders bevorzugt wird die Platine oberflächenbehandelt, bevorzugt wird die Platine beschichtet und ganz besonders bevorzugt konversionsbeschichtet. Im Rahmen der Erfindung ist es jedoch auch vorstellbar, dass das Kraftfahrzeugbauteil nach Umformung der Platine beschichtet wird.

Insbesondere wird mit dem erfindungsgemäßen Verfahren eine Kraftfahrzeugsäule aus einer Aluminiumlegierung hergestellt, wobei die Kraftfahrzeugsäule weiterhin mit Verstärkungs-, Schließ- und/oder Verbindungsblechteilen gekoppelt wird. Diese Bauteile werden nach Abschluss des Umformverfahrens aufgebracht. Insbesondere handelt es sich dabei um Innen- und/oder Außenverstärkungsbleche. Das Innenverstärkungsblech kann beispielsweise in Form eines Patches auf das hergestellte Kraftfahrzeugbauteil, insbesondere die Kraftfahrzeugsäule aufgebracht werden.

Im Rahmen der Erfindung ist es jedoch auch möglich mit dem Innenverstärkungsblech und/oder dem Außenverstärkungsblech ein entsprechendes Hohlbauteil herzustellen. Bei dem Verstärkungsblech handelt es sich insbesondere auch um ein Aluminiumbauteil. Das Verstärkungsblech kann jedoch auch als Stahlbauteil aufgebracht sein oder aus Faserverbundwerkstoff. Besonders bevorzugt wird das Verstärkungsblech mit dem Kraftfahrzeugbauteil, insbesondere der Kraftfahrzeugsäule verklebt, bevorzugt mit thermisch aktivierbarem Kleber. Im Rahmen der Erfindung ist es jedoch auch möglich, dass die beiden Bauteile miteinander verschweißt werden. Auch sind formschlüssige Koppelungsverfahren wie Nieten, insbesondere Stanznieten oder aber ein Clinchvorgang möglich. Auch ist es möglich ein Schweißnieten durchzuführen oder eine Kombination aus Punktschweißen und Kleben vorzunehmen.

Weitere Vorteile, Merkmale, Eigenschaften und Aspekte der vorliegenden Erfindung werden in der nachfolgenden Beschreibung erläutert sowie in den schematischen Figuren dargestellt. Diese dienen dem einfachen Verständnis der Erfindung. Es zeigen:
- Figur 1a und b: eine Seitenansicht sowie eine Querschnittsansicht einer erfindungsgemäß hergestellten Kraftfahrzeug B-Säule,
- Figur 2a und b: ein Außenverstärkungsblech für eine Kraftfahrzeug B-Säule gemäß Figur 1 und
- Figur 3a bis c: ein Innenverstärkungsblech.

In den Figuren werden für gleiche oder ähnliche Bauteile dieselben Bezugszeichen verwendet, auch wenn eine wiederholte Beschreibung aus Vereinfachungsgründen entfällt.

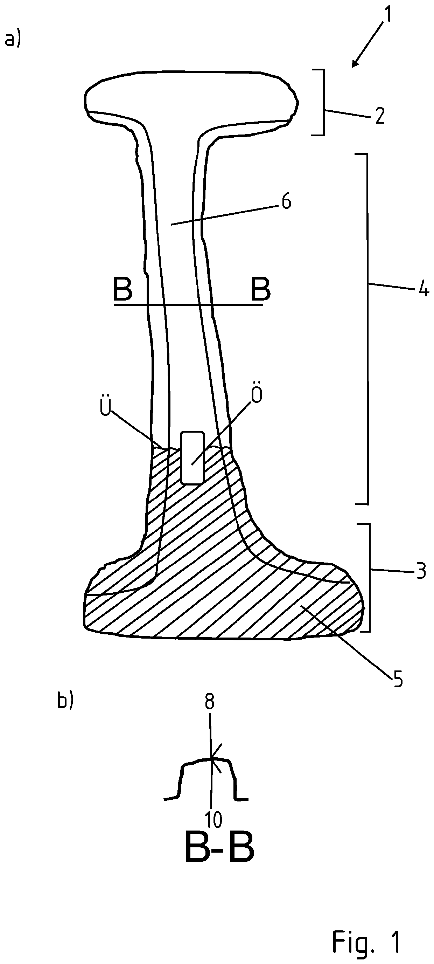

Figur 1a zeigt ein erfindungsgemäßes Kraftfahrzeugbauteil 1 in Form einer B-Säule in Seitenansicht. Die B-Säule weist einen Kopfbereich 2 zur Anbindung an einen nicht näher dargestellten Dachholm sowie einen Fußbereich 3 zur Anbindung an einen nicht näher dargestellten Seitenschweller auf. Zwischen dem Kopfbereich 2 und dem Fußbereich 3 erstreckt sich ein Mittelabschnitt 4 mit einer Öffnung Ö. Erfindungsgemäß ist nunmehr der Fußbereich 3 sowie ein unterer Teil des Mittelabschnittes 4 ausgebildet als erster Bereich 5, der während des partiell unterschiedlichen Abschreckens und ggf. Umformens bevorzugt für einen Zeitraum von 0,05 bis 30 min., insbesondere 0,1 bis 20 min. und bevorzugt 0,2 bis 15 min. auf 150-250°C gehalten wird, so dass hier ein weicheres bzw. duktileres Gefüge eingestellt ist. Der obere Mittelabschnitt 4 sowie der Kopfbereich 2 sind hier als zweiter Bereich 6 ausgebildet, der gegenüber dem ersten Bereich 5 härtere Eigenschaften aufweist und eine Dehngrenze zwischen 350 MPa und 450 MPa besitzt. Getrennt sind erster Bereich 5 und weiterer bzw. zweiter Bereich 6 durch einen Übergang Ü, der sich über 0,1 mm bis 80 mm, vorzugsweise 1 mm bis 50 mm erstreckt. In Figur 1b ist ein Querschnitt gemäß der Schnittlinie B-B dargestellt, so dass zu erkennen ist, dass während des Umformverfahrens zumindest der Mittelabschnitt 4 in Form eines Hutprofils im Querschnitt ausgebildet wurde. Somit ist das Bauteil dreidimensional geformt worden.

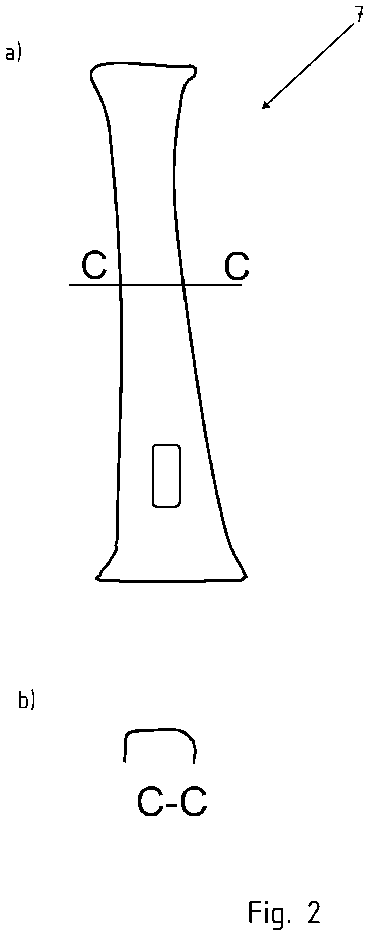

Ferner dargestellt sind in Figur 2a und b ein Außenverstärkungsblech 7 in Seitenansicht sowie in Querschnittsansicht. Das Außenverstärkungsblech 7 weist einen im Wesentlichen homogenen Querschnittsverlauf auf und ist gemäß Figur 1b als U-förmiges Verstärkungsblech ausgebildet. Dieses wird gemäß Figur 2b als im Querschnitt U-förmiges Außenverstärkungsblech 7 ausgebildet. Dieses wird auf die Außenseite 8 gemäß Figur 1b des Kraftfahrzeugbauteils 1 aufgebracht, insbesondere durch Verkleben, besonders bevorzugt mit thermisch aktivierbarem Kleber.

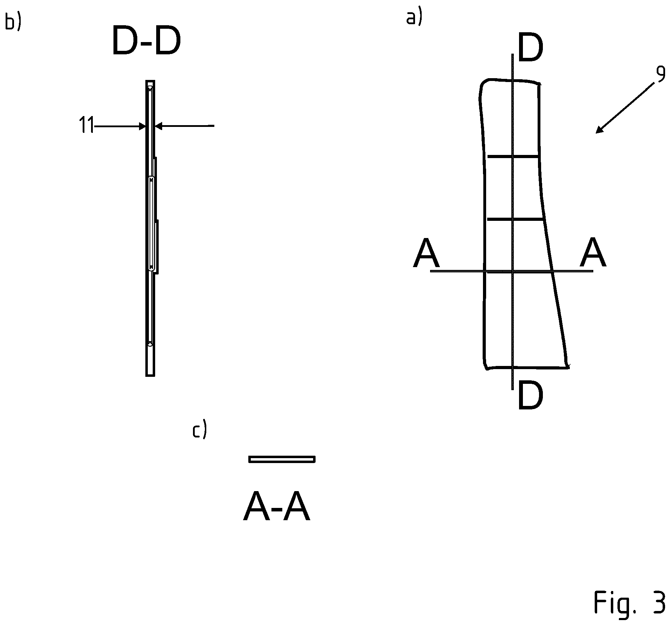

In Figur 3a bis c ist ferner ein Innenverstärkungsblech 9 dargestellt, dass in Figur 3a als Seitenansicht, Figur 3b als Längsschnitt und Figur 3c als Querschnitt dargestellt ist. Das Innenverstärkungsblech 9 wird auf einer Innenseite gemäß Figur 1b der B-Säule angebracht. Das Innenverstärkungsblech 9 weist gemäß Längsschnittlinie D-D partiell voneinander verschiedene Wandstärken 11 im Längsverlauf auf. Der Querschnittsverlauf ist dargestellt in Figur 3c gemäß Schnittlinie A-A, wobei dieser homogen ausgebildet ist. Das Innenverstärkungsblech 9 wird an der Innenseite 10 gemäß Figur 1b aufgebracht, bevorzugt durch Verkleben.

### Bezugszeichen:

- 1 -: Kraftfahrzeugbauteil
- 2 -: Kopfbereich
- 3 -: Fußbereich
- 4 -: Mittelabschnitt
- 5 -: erster Bereich
- 6 -: weiterer Bereich
- 7 -: Außenverstärkungsblech
- 8 -: Außenseite zu 1
- 9 -: Innenverstärkungsblech
- 10 -: Innenseite zu 1
- 11 -: Wandstärke

- Ö -: Öffnung
- Ü -: Übergang

## Patentansprüche

1. Verfahren zur Herstellung eines Kraftfahrzeugbauteils (1), insbesondere einer Kraftfahrzeugsäule, **gekennzeichnet, durch** folgende Verfahrensschritte:
- Bereitstellen einer ausscheidungshärtbaren Platine aus einer 6000er oder 7000er Aluminiumlegierung,
- Lösungsglühen der Platine bei einer Temperatur zwischen 350°C und 550°C für einen Zeitraum von 2 bis 30 min., insbesondere 3 bis 20 min. und bevorzugt 5 bis 15 min., insbesondere bei einer 7000er Aluminiumlegierung bei einer Temperatur zwischen 440°C und 480°C und bei einer 6000er Aluminiumlegierung insbesondere bei einer Temperatur zwischen 490°C und 545°C,
- Partiell unterschiedliches Abschrecken der lösungsgeglühten Platine, wobei ein erster Bereich (5) auf eine Temperatur zwischen 150°C und 250°C abgeschreckt und mindestens ein weiterer Bereich (6) auf eine Temperatur unter 150°C abgeschreckt werden,
- Umformen der Platine während oder nach dem partiell unterschiedlichen Abschrecken,
- Warmauslagern **durch** Erwärmen und Einstellen einer Dehngrenze in mindestens dem ersten Bereich (5) größer 120 MPa und kleiner 200 MPa und in dem weiteren Bereich (6) größer 200 MPa und kleiner gleich 550 MPa und einem Dehngrenzendelta zwischen zwei Bereichen (5, 6) von größer 50, bevorzugt größer 100MPa.

2. Verfahren nach Anspruch 1, **dadurch gekennzeichnet, dass** das Abschrecken in einer Temperierstation durchgeführt wird, insbesondere in einem Flachwerkzeug durch Kontaktkühlung.

3. Verfahren nach Anspruch 1 oder 2, **dadurch gekennzeichnet, dass** die Temperaturen nach dem partiell unterschiedlichen Abschrecken der ersten und zweiten Bereiche (5, 6) der Platine für einen Zeitraum von 0,05 bis 30 min., insbesondere 0,1 bis 20 min. und bevorzugt 0,2 bis 15 min. gehalten werden.

4. Verfahren nach einem der Ansprüche 1 bis 3, **dadurch gekennzeichnet, dass** vor dem Umformen eine zweite Abschreckstufe durchgeführt wird, bei der insbesondere die gesamte Platine auf eine Temperatur unter 100°C, insbesondere auf Raumtemperatur abgeschreckt wird.

5. Verfahren nach einem der Ansprüche 1 bis 4, **dadurch gekennzeichnet, dass** das Umformen bei im Wesentlichen der Abschrecktemperatur durchgeführt wird oder dass das Umformen bei Raumtemperatur durchgeführt wird.

6. Verfahren nach einem der vorhergehenden Ansprüche, **dadurch gekennzeichnet, dass** das Warmauslagern einstufig für einen Zeitraum von 5 bis 24 Std. bei einer Temperatur zwischen 100°C und 200°C, insbesondere 140°C bis 160°C durchgeführt wird.

7. Verfahren nach einem der Ansprüche 1 bis 5, **dadurch gekennzeichnet, dass** das Warmauslagern mehrstufig durchgeführt wird, wobei in der ersten Stufe für einen Zeitraum von 6 bis 24 Std. bei 80 bis 150°C, besonders bevorzugt 80-120°C, und in den daran anschließenden Stufen für einen Zeitraum von 6 bis 24 Std. bei 100°C bis 200°C, besonders bevorzugt 100-150°C, warm ausgelagert wird.

8. Verfahren nach einem der vorhergehenden Ansprüche, **dadurch gekennzeichnet, dass** die Platine oberflächenbehandelt wird, bevorzugt wird die Platine beschichtet und insbesondere konversionsbeschichtet.

9. Verfahren nach einem der vorhergehenden Ansprüche, **dadurch gekennzeichnet, dass** eine Kraftfahrzeugsäule, ein Dachgurt, ein vorderer oder hinterer Längsträger, ein Stoßfänger im oberen oder unteren Lastpfad, ein Schweller, eine Querversteifung, oder eine Türverstärkung aus Aluminium hergestellt werden.

10. Verfahren nach einem der vorhergehenden Ansprüche, **dadurch gekennzeichnet, dass** das Kraftfahrzeugbauteil (1) mit mindestens einem Verstärkungsblech gekoppelt wird, wobei das Verstärkungsblech ebenfalls nach einem Verfahren nach mindestens Patentanspruch 1 erzeugte Bereiche unterschiedlicher Festigkeit aufweist, oder dass das Verstärkungsblech eine homogene Festigkeit aufweist, insbesondere werden das Kraftfahrzeugbauteil (1) und das Verstärkungsblech miteinander verklebt, wobei besonders bevorzugt der Kleber thermisch aktiviert wird.

11. Verfahren nach wenigstens Anspruch 1, **dadurch gekennzeichnet, dass** während dem Umformen die Platine auf eine Temperatur unter 100°C, insbesondere auf Raumtemperatur abgeschreckt wird.

12. Verfahren nach einem der vorhergehenden Ansprüche, **dadurch gekennzeichnet, dass** das Warmauslagern nach dem Umformen innerhalb von weniger als sieben Tagen, bevorzugt innerhalb von weniger als drei Tagen, begonnen wird.

13. Verfahren nach Anspruch 1, **dadurch gekennzeichnet, dass** in dem weiteren Bereich (6) eine Dehngrenze zwischen 300 MPa und 450 MPa, bevorzugt zwischen 350 MPa und 450 Mpa eingestellt wird.

## Claims

1. Method for producing a motor vehicle component (1), in particular a motor vehicle pillar, **characterised by** the following method steps:
- providing a plate which is able to be precipitation hardened, made from a 6000 or 7000 aluminium alloy,
- solution annealing the plate at a temperature between 350°C and 550°C for a period of 2 to 30 minutes, in particular 3 to 20 minutes and preferably 5 to 15 minutes, in particular for a 7000 aluminium alloy at a temperature between 440°C and 480°C and for a 6000 aluminium alloy in particular at a temperature between 490°C and 545°C,
- partially different quenching of the solution annealed plate, wherein a first region (5) is quenched to a temperature between 150°C and 250°C and at least one further region (6) is quenched to a temperature below 150°C,
- forming the plate during or after the partially different quenching,
- artificial aging by heating and setting a yield strength in at least the first region (5) greater than 120MPa and less than 200MPa and in the further region (6) greater than 200MPa and less than or equal to 550MPa and a yield strength delta between two regions (5, 6) of greater than 50, preferably greater than 100MPa.

2. Method according to Claim 1, **characterised in that** the quenching is carried out in a tempering station, in particular in a flat tool by contact cooling.

3. Method according to Claim 1 or 2, **characterised in that** the temperatures after the partially different quenching of the first and second regions (5, 6) of the plate are held for a period of 0.05 to 30 minutes, in particular 0.1 to 20 minutes and preferably 0.2 to 15 minutes.

4. Method according to any one of Claims 1 to 3, **characterised in that** before the forming, a second quenching step is carried out, in which in particular the entire plate is quenched to a temperature below 100°C, in particular to room temperature.

5. Method according to any one of Claims 1 to 4, **characterised in that** the forming is carried out at substantially the quenching temperature or that the forming is carried out at room temperature.

6. Method according to any one of the preceding claims, **characterised in that** the artificial aging is carried out in one step for a period of 5 to 24 hours at a temperature between 100°C and 200°C, in particular 140°C to 160°C.

7. Method according to any one of Claims 1 to 5, **characterised in that** the artificial aging is carried out in multiple steps, wherein, in the first step, artificial aging is carried out for a period from 6 to 24 hours at 80 to 150°C, particularly preferably 80-120°C, and in the subsequent steps for a period from 6 to 24 hours at 100°C to 200°C, particularly preferably 100-150°C.

8. Method according to any one of the preceding claims, **characterised in that** the plate is surface treated, preferably the plate is coated and in particular conversion coated.

9. Method according to any one of the preceding claims, **characterised in that** a motor vehicle pillar, a roof strap, a front or rear side member, a bumper in the upper or lower load path, a sill, a cross brace or a door reinforcement is produced from aluminium.

10. Method according to any one of the preceding claims, **characterised in that** the motor vehicle component (1) is coupled to at least one reinforcing plate, wherein the reinforcing plate likewise has regions of different strength produced according to a method according to at least Claim 1; or the reinforcing plate has a homogenous strength, in particular the motor vehicle component (1) and the reinforcing plate are glued to each other, wherein particularly preferably the glue is thermally activated.

11. Method according to at least Claim 1, **characterised in that**, during the forming, the plate is quenched to a temperature below 100°C, in particular to room temperature.

12. Method according to any one of the preceding claims, **characterised in that** the artificial aging is started after the forming within less than seven days, preferably within less than three days.

13. Method according to Claim 1, **characterised in that**, in the further region (6), a yield strength is set between 300 MPa and 450 MPa, preferably between 350 MPa and 450 MPa.

## Revendications

1. Procédé de fabrication d'une pièce de véhicule automobile (1), notamment d'un montant de véhicule automobile, **caractérisé par** les étapes de procédé suivantes :
- préparation d'une plaque pouvant être trempée par précipitation à partir d'un alliage d'aluminium des séries 6000 ou 7000,
- recuit de mise en solution de la plaque à une température comprise entre 350 °C et 550 °C pendant un intervalle de temps de 2 à 30 minutes, notamment de 3 à 20 minutes et de préférence de 5 à 15 minutes, notamment pour un alliage d'aluminium de la série 7000 à une température comprise entre 440 °C et 480 °C et pour un alliage d'aluminium de la série 6000 notamment à une température comprise entre 490 °C et 545 °C,
- trempe partiellement différente de la plaque après recuit de mise en solution, une première zone (5) étant trempée à une température comprise entre 150 °C et 250 °C et au moins une autre zone (6) étant trempée à une température inférieure à 150 °C,
- formage de la plaque pendant ou après la trempe partiellement différente,
- précipitation à chaud par réchauffage et réglage d'une limite d'allongement au moins dans la première zone (5) entre 120 MPa et 200 MPa et dans l'autre zone (6) entre 200 MPa et 550 MPa et avec un delta de limite d'allongement entre deux zones (5, 6) supérieur à 50, de préférence supérieur à 100 MPa.

2. Procédé selon la revendication 1, **caractérisé en ce que** la trempe est effectuée dans un poste d'équilibrage de température, notamment dans un outil à plat avec refroidissement par contact.

3. Procédé selon la revendication 1 ou 2, **caractérisé en ce que** les températures après la trempe partiellement différente des première et deuxième zones (5, 6) de la plaque sont maintenues pendant un intervalle de temps de 0,05 à 30 minutes, notamment de 0,1 à 20 minutes et de préférence de 0,2 à 15 minutes.

4. Procédé selon l'une des revendications 1 à 3, **caractérisé en ce que**, avant le formage, on effectue une deuxième étape de trempe lors de laquelle notamment toute la plaque est trempée à une température inférieure à 100 °C, notamment à température ambiante.

5. Procédé selon l'une des revendications 1 à 4, **caractérisé en ce que** le formage est effectué à une température sensiblement égale à la température de trempe ou **en ce que** le formage est effectué à température ambiante.

6. Procédé selon l'une des revendications précédentes, **caractérisé en ce que** la précipitation à chaud est effectuée en une étape pendant un intervalle de temps de 5 à 24 heures à une température entre 100 °C et 200 °C, notamment entre 140 °C et 160 °C.

7. Procédé selon l'une des revendications 1 à 5, **caractérisé en ce que** la précipitation à chaud est effectuée en plusieurs étapes, la précipitation à chaud s'effectuant dans la première étape pendant un intervalle de temps de 6 à 24 heures à une température de 80 à 150 °C, de préférence de 80 à 120 °C, et dans les étapes suivantes pendant un intervalle de temps de 6 à 24 heures à une température de 100 °C à 200 °C, de préférence de 100 à 150 °C.

8. Procédé selon l'une des revendications précédentes, **caractérisé en ce que** la plaque subit un traitement de surface, la plaque étant de préférence revêtue et notamment revêtue par conversion.

9. Procédé selon l'une des revendications précédentes, **caractérisé en ce qu'**on fabrique un montant de véhicule automobile, une membrure de toit, un longeron avant ou arrière, un pare-chocs dans le cheminement supérieur ou inférieur des forces, un bas de caisse, un renfort transversal ou un renfort de porte en aluminium.

10. Procédé selon l'une des revendications précédentes, **caractérisé en ce que** la pièce de véhicule automobile (1) est couplée à au moins une tôle de renfort, la tôle de renfort comportant des zones qui sont également produites selon un procédé selon au moins la revendication 1 et qui ont des rigidités différentes, ou **en ce que** la tôle de renfort a une rigidité homogène, la pièce de véhicule automobile (1) et la tôle de renfort étant notamment collées l'une à l'autre, l'adhésif étant de préférence activé thermiquement.

11. Procédé au moins selon la revendication 1, **caractérisé en ce que**, pendant le formage, la plaque est trempée à une température inférieure à 100 °C, notamment à température ambiante.

12. Procédé selon l'une des revendications précédentes, **caractérisé en ce que** la précipitation à chaud commence moins de sept jours après le formage, de préférence moins de trois jours après le formage.

13. Procédé selon la revendication 1, **caractérisé en ce que**, dans l'autre zone (6), une limite d'allongement entre 300 MPa et 450 MPa, de préférence entre 350 MPa et 450 MPa, est réglée.
